# EUROPEAN PATENT APPLICATION

(11) **EP 3 203 042 A1**
(43) Date of publication of application: **09.08.2017**
(21) Application number: 16154290.7
(22) Date of filing: 04.02.2016
(51) Int. Cl.: F01L 1/047, F16D 1/08, F16H 53/02, B21D 53/84

(54) **A CAMSHAFT AND ITS MANUFACTURE**

(71) Applicant: Ovako Sweden AB, 813 82 Hofors (SE)
(72) Inventor: BENNSTEDT, Niklas, 790 24 Toftbyn (SE); CLAESSON, Erik, 813 35 Hofors (SE)
(74) Representative: Bergenstråhle Group AB

(57) **Abstract**

A process for the manufacture of a camshaft comprises the steps a) providing a segment with a hole wherein the shape of the hole is adapted to fit onto the cross section of the shaft when a force is applied radially to the segment, b) with the same force as in step a) applied, inserting the camshaft axially into the hole in the segment, and when the segment is placed in the desired position on the camshaft; c) releasing the force applied to the segment so that the segment changes shape and comes into contact with the camshaft. Advantages include that the camshaft can be made lightweight, with less difficulties and at a lower cost.

## Description

### Technical field

The present invention relates generally to camshafts as well as a method for their manufacture, more in detail it relates to the fixing of segments such as cam lobes on camshafts.

### Background

Generally camshafts and their manufacture are well known in the art. The cam lobes and other segments on the camshaft have to be fixed with a certain accuracy on the shaft.

EP0282166 discloses a camshaft with an odd number of lobes on the inside of the lobes towards the shaft in contact with the shaft. The numbers in the paragraph refer to the figures in EP0282166. Openings 15 are axially aligned, on a hollow tubular shaft 11 expanded into interference engagement with all of the element openings 15, wherein each of said non-round axial opening 15 has an odd number of regularly spaced lobes 16, said odd number being at least three, the periphery 20 of said opening 15 being primarily defined by joined outwardly-convex arcs 22, 23.

US 5,826,461 discloses cam lobes that are attached by expanding the shaft.

US 2015/0026977 discloses that the cam lobe is shrunk onto the shaft by cooling the shaft and heating the segment.

DE10024552 discloses non solid camshaft lobes to be put on a shaft.

US 2010/0088890 discloses camshafts where the attachment is concentric.

It is still a problem in the art how to simplify the manufacture of camshafts and make lighter and less expensive camshafts.

### Summary

It is an object of the present invention to obviate at least some of the disadvantages in the prior art and provide an improved method for the manufacture of camshafts as well as an improved camshaft.

In a first aspect there is provided a camshaft comprising a shaft and at least one segment, wherein the at least one segment comprises at least one through hole, wherein the shaft is positioned in the hole of the at least one segment, wherein the segment is in contact with the shaft in at least two contact points, and wherein the shape of the hole in the at least one segment is adapted to the cross section of the shaft so that the segment has a tension causing it to exerting a pressure on the shaft in the at least two contact points.

In a second aspect there is provided a method for the manufacture of a camshaft comprising at least one segment comprising the steps of:
a) providing at least one segment with at least one hole wherein the shape of the hole is adapted to fit onto the cross section of the shaft when a force is applied radially to the at least one segment,
b) with the same force as in step a) applied, inserting the camshaft axially into the hole in the at least one segment,
c) when the at least one segment is placed in the desired position on the camshaft; releasing the force applied to the at least one segment so that the at least one segment changes shape and comes into contact with the camshaft.

Further aspects and embodiments are defined in the appended claims, which are specifically incorporated herein by reference.

One advantage is that lighter camshafts can be manufacture. Further the manufacturing process becomes easier. Another advantage is that the camshaft is simple and inexpensive to manufacture.

A further advantage is that the segment is able to compensate for yielding of the material. If or when the material, in particular at the contact points between the segment and shaft yield with time, the pre-tension in the segment make the segment to act as a spring keeping a pressure on the shaft and thus compensating for the yielding.

Yet another advantage is that a lighter camshaft can be made.

### Brief description of the drawings

The invention is now described, by way of example, with reference to the accompanying drawings, in which:
Fig. 1 a shows a perspective view of a camshaft assembly according to the invention comprising from left to right a cam lobe, a bearing journal, and a gear.
Fig 1b shows a side view of the camshaft assembly of Fig 1 a.
Fig 2a shows a different side view of the camshaft assembly of Fig 1 a.
Fig 2b shows a cross sectional view of the camshaft assembly of Fig 2a cut along the plane A-A.
Fig 3a and b show a perspective view and a side view respectively of a cam lobe according to the invention.

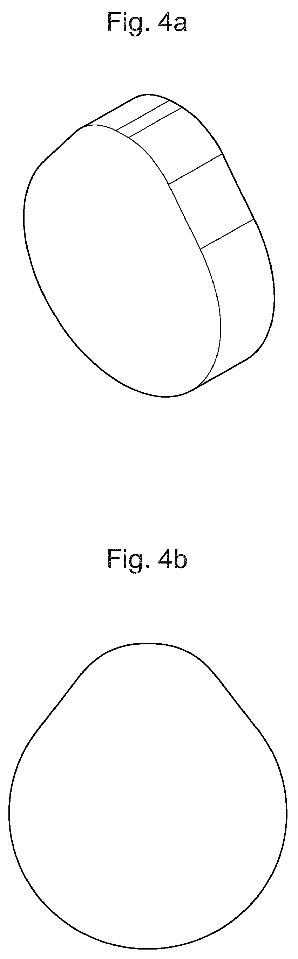

Fig 4a and b show a perspective view and a side view respectively of a cam lobe before a hole is made.
Fig 5a and b show a perspective view and a side view respectively of a cam lobe with a deviation.
Fig 6a and b show a perspective view and a side view respectively of a cam lobe with one larger and one smaller deviation.
Fig 7a and b show a perspective view and a side view respectively of a cam lobe.

### Detailed description

Before the invention is disclosed and described in detail, it is to be understood that this invention is not limited to particular configurations, method steps, substrates, and materials disclosed herein as such configurations, method steps, substrates, and materials may vary somewhat. It is also to be understood that the terminology employed herein is used for the purpose of describing particular embodiments only and is not intended to be limiting since the scope of the present invention is limited only by the appended claims and equivalents thereof.

It must be noted that, as used in this specification and the appended claims, the singular forms "a", "an" and "the" include plural referents unless the context clearly dictates otherwise.

If nothing else is defined, any terms and scientific terminology used herein are intended to have the meanings commonly understood by those of skill in the art to which this invention pertains.

A deviation denotes a cavity or an indentation on the inner part of the segment. The deviation is a deviation from for instance a circular shape of the hole in the segment.

A segment denotes an object fixed on a shaft such as a camshaft. Examples of segments include but are not limited to a cam lobe, a gear and a bearing journal.

In a first aspect there is provided a camshaft comprising a shaft and at least one segment, wherein the at least one segment comprises at least one through hole, wherein the shaft is positioned in the hole of the at least one segment, wherein the segment is in contact with the shaft in at least two contact points, and wherein the shape of the hole in the at least one segment is adapted to the cross section of the shaft so that the segment has a strain causing it to exerting a pressure on the shaft in the at least two contact points.

The segment is made so that the at least one hole is slightly different from the cross section of the shaft onto which it is intended to be fixed. The hole in the segment does not match the cross section of the shaft. In order to position the segment in the shaft the segment is subjected to a force so that it deflects and so that the hole changes shape. When the segment is subjected to a suitable force the hole changes shape so that the hole matches the cross section of the shaft and so that it is possible to insert the shaft in the hole in the segment. This is possible to achieve when designing shape of the segment. The segment is subjected to a predetermined force to obtain the correct shape so that it matches the cross section of the shaft.

The force is in one embodiment applied radially to the segment. The force is typically applied so that the segment is pressed between two surfaces. In one embodiment the surfaces are adapted to match the shape the outer surface of the segment.

When the force is released the segment strives to change its shape back, but since the shape of the hole in the segment and the cross section of the shaft do not match, the segment will exert a pressure on the shaft in at least two contact points. This pressure will hold the segment in the correct position on the shaft. The shape of the hole in the segment and the cross section of the shaft only match when a particular force is applied to the segment. If no force is applied to the segment it strives to take an equilibrium shape. This equilibrium shape is different and does not match the cross section of the shaft. It is conceived that the match between the shape of the hole in the segment and the cross section of the shaft when subjected to the correct pressure is so that the hole in the segment is slightly larger than the cross section so that the segment easily can be put on the shaft. This margin can in the light of the description be determined by a skilled person for each application.

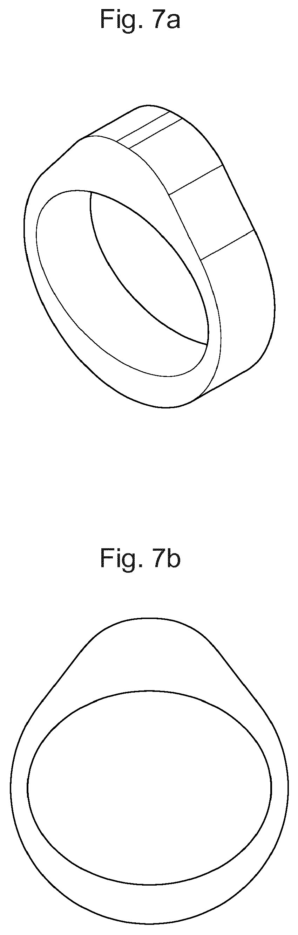

One embodiment is depicted in Fig 7a and 7b, where a cam lobe has an oval hole. When exerting a force on the cam lobe, i.e. by pressing it, the shape of the hole will elastically change to a circular hole. Then it is possible to insert a shaft with a circular cross section in the hole, while the force is still applied. When the force is released the cam lobe has a tendency to change its shape back towards the origin oval hole. Since the cross section of the shaft is circular this creates a tension in the cam lobe so that a pressure is exerted by the segment onto the shaft in two contact points.

The cam lobe is acting as a spring, with a tendency to return to a shape which is different from the cross section of the shaft, thereby creating a pressure on the shaft. This pressure holds the cam lobe in the correct position.

In one embodiment the pressure exerted by the cam lobe on the shaft in the at least two contact points is induced by the cam lobe acting as a spring. The cam lobe with tension on the shaft can be viewed as a spring clamping onto the shaft.

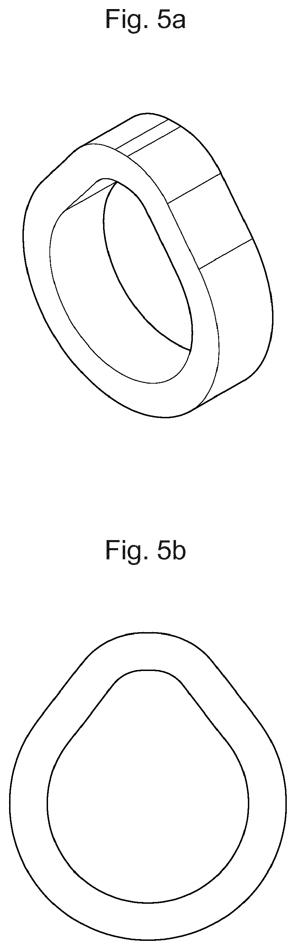

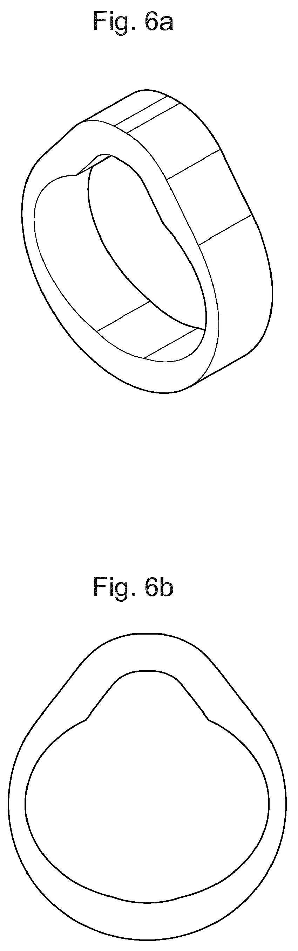

In one embodiment there are at least three contact points between the shaft and the at least one segment. In one embodiment there are three contact points between the shaft and the at least one segment. This is achieved for instance in an embodiment where there is a deviation on the inner surface of the segment, giving three contact points in one embodiment. One embodiment is depicted in Figs 5a and 5b. Yet another such embodiment is depicted in Figs 6a and 6b. The advantage of an embodiment with three contact points is that it facilitates the positioning of the segment on the shaft. In particular an embodiment with three contact points facilitates centering of the segment on the shaft, which is of importance for camshafts.

In yet another embodiment there are four contact points, achieved by two deviations in the inner part of the segment. Such an embodiment is depicted in Fig 6a and 6b, where there is one large deviation and one small deviation. Thus in one embodiment the number of contact points between the shaft and the at least one segment is from 3 to 4.

According to the invention the segments are made so that the segments exert a force on the camshaft holding the segments in place. The deformation (extension or contraction) of the segment is relatively small compared to the overall dimensions of the segments, but the segments can nevertheless be viewed as springs. When put on the shaft the deformations of the segments are well below the elastic limit in one embodiment. Compared with a camshaft where the segments are pressed onto the camshaft, the present invention offers segments acting a springs with a larger interval of possible deformation (extension or contraction) of the segment. This larger movement possibility gives a tolerance forgiving property to the segments and camshaft.

In one embodiment at least one of the shaft and the circumference of the hole in the at least one segment comprises grooves. In one embodiment at least one of the shaft and the segment comprises at least one pattern selected from the group consisting of groves, ribs, flutes, serrations, and ridges. At least the part of the segment intended to be in contact with the shaft comprises the pattern. In case additional securing of the segment on the shaft would be necessary some kind of pattern on at least one of the shaft and the circumference of the hole in the segment is present. Examples of such a pattern includes but is not limited to groves, ribs, flutes, serrations, and ridges.

The camshaft may comprise any material suitable for a camshaft. A skilled person can determine which materials are suitable for camshafts with regard to properties including but not limited to temperature resistance, wear resistance, strength and so forth. It is conceived that the shaft and the at least one segment may comprise different materials or the same material. For instance the shaft is in one embodiment made of a first material, a segment which is a cam lobe is made of a second material, a segment which is a gear is made of a third material, and a segment which is a bearing journal is made of a fourth material. In one embodiment the camshaft comprises at least one composite material. In one embodiment the camshaft comprises at least one composite material comprising a ceramic material and a steel. In one embodiment the camshaft comprises at least one type of steel. In one embodiment the steel is of any grade manufactured with any method. In one embodiment the at least one segment comprises steel. In one embodiment the camshaft comprises at least one engineering steel including but not limited to a through hardening steel, a case hardening steel, a quench and tempering steel and a micro alloyed steel. In one embodiment the camshaft comprises at least one steel found in any one of the standards selected from EN 10083, EN 10084, EN 10085 and ISO 683-17.

In one embodiment the at least one segment is additionally fixed to the shaft using at least one method selected from the group consisting of fixing with a mechanical lock, and fixing with bonding. Bonding includes but is not limited to welding and adhesive bonding. In one embodiment the additional fixing of the segment to the shaft includes at least one selected from the group consisting of welding, brazing, soldering, riveting, and bolting. In one embodiment the at least one segment is additionally fixed to the shaft using at least one method selected from the group consisting of fixing with a mechanical lock, fixing with welding, and fixing using an adhesive. Fixing with a mechanical lock includes but is not limited to fixing with a pin. If an additional securing of the segment would be necessary at least one of these methods can be used. It is also encompassed to use any other method known to a skilled person in order to additionally secure the segment. In many embodiments additional securing is not necessary.

In a second aspect there is provided a method for the manufacture of a camshaft comprising at least one segment comprising the steps of:
a)providing at least one segment with at least one hole wherein the shape of the hole is adapted to fit onto the cross section of the shaft when a force is applied radially to the at least one segment,
b)with the same force as in step a) applied, inserting the camshaft axially into the hole in the at least one segment,
c)when the at least one segment is placed in the desired position on the camshaft; releasing the force applied to the at least one segment so that the at least one segment changes shape and comes into contact with the camshaft.

It is conceived that the force applied in steps a) and b) is a predetermined force so that the segment takes the desired shape to fit onto the cross section of the shaft. This force is referred to as "the force".

In the method for manufacturing the camshaft the segment is manufactured using any suitable method giving the pre-defined shape. The shape of the segment has to be designed to give the correct attachment force. The design and cross section of the shaft has to be considered when designing the segment. The hole in the segment shall be large enough to allow the shaft to be inserted when a force is applied to the segment. When the force is released the segment should allow appropriate fixing of the segment on the shaft.

The segment is positioned in the correct position on the shaft and then the force is released so that the segment is fixed in the correct position.

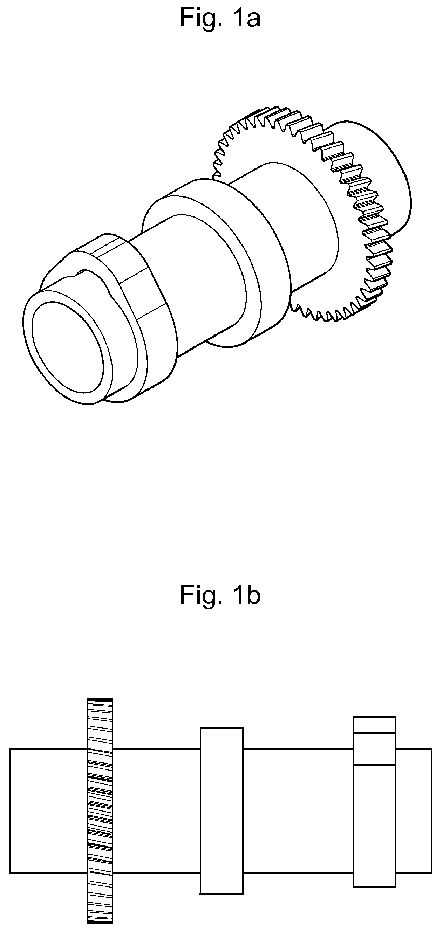

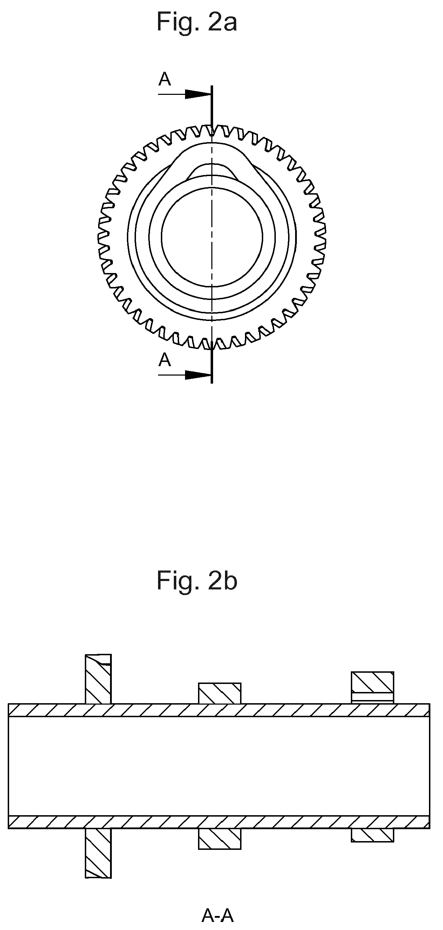

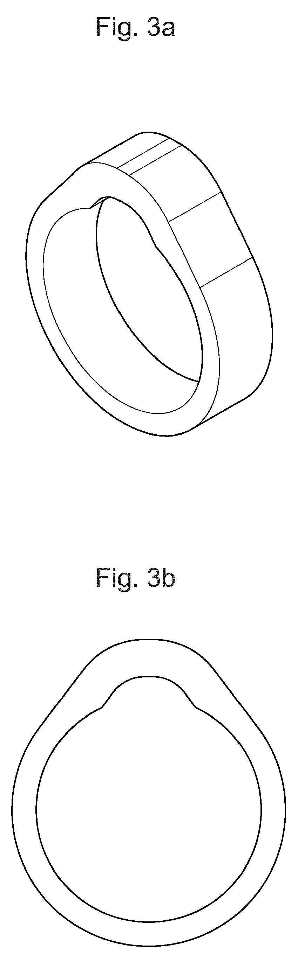

In one embodiment the cross sectional shape of the hole when the force is applied is circular. In one embodiment the cross sectional shape of the hole when the force is applied is circular with at least one deviation. In one embodiment the cross section of the shaft is circular, in such an embodiment the hole is in one embodiment also circular when the right force is applied. In an alternative embodiment with a circular shaft, the hole is partially circular, so that there is at least one deviation, as depicted in Figs 1, 2, 3, and 5. The deviation is of any shape as long as material is removed from the segment so that the hole becomes larger and so that the deviation creates a hole which is not entirely circular when a force is applied. In one embodiment the cross sectional shape of the hole when the force is applied is circular with at least one deviation so that the entire circumference of the hole is not circular. I.e. so that the entire circumference of the hole is not a part of a circle, but where more than half of the circumference of the hole is a part of a circle for one deviation. For the case with two deviations or more at least a part of the circumference of the hole is a part of the circular hole.

It is conceived that the force applied to the segment is a specific force adapted to the specific segment. The force varies depending on the material and shape of the segment.

In one embodiment the force is adapted so that it is below the yield point so that the material in the segment does not deform plastically, but only deforms elastically when the force is applied. In an alternative embodiment the force is adapted so that the material in the segment deforms plastically when the force is applied. In both embodiments it is conceived that the segment at least to some extent shall be able to strive to change its shape so that a force is achieved from the segment into the shaft.

In one embodiment the hole in the at least on segment is made by applying a force radially to the at least one segment and thereafter creating the hole. In one embodiment there is already a hole in the segment and after applying a force the hole is made, while the force is applied. In one embodiment a segment with a small hole is subjected to a force, where after a circular hole is drilled in the segment while the force is still applied. This will result in a segment with a hole that is non circular when no force is applied and which is circular when a certain force is applied.

In one embodiment the at least one segment is hardened before step c).

In one embodiment the camshaft is solid. In an alternative embodiment the camshaft is at least partially hollow. In one embodiment the shaft is made from a tube.

In one embodiment the at least one segment is finished after step c). Examples of finishing includes but are not limited to polishing, grinding, and milling.

In one embodiment the at least one segment is fixed to the camshaft with at least one additional method.

In one embodiment the at least one segment provided in step a) is made from one selected from the group consisting of a tube, a bar, and a forged object. In one embodiment the segments are made from a tube.

In one embodiment the segments are made from a tube which has the desired cross section. In one embodiment the tube has near the desired cross section. In one embodiment the cross section of the tube does not deviate more than 2% from the desired cross section of the segment. The tube with the desired cross section is then cut into segments, such as but not limited to cam lobes. The advantage is the ease of manufacture in large scale.

The principle of attaching a segment such as a cam lobe on a camshaft is not only applicable to cam lobes, but also to other segments and objects to be attached to a shaft. On a camshaft also other segments can be attached by using the same principle. Examples of such segments include but are not limited to bearing journals and gears, as depicted in Fig 1 a.

All the described alternative embodiments above or parts of an embodiment can be freely combined without departing from the inventive idea as long as the combination is not contradictory.

Other features and uses of the invention and their associated advantages will be evident to a person skilled in the art upon reading the description and the examples.

It is to be understood that this invention is not limited to the particular embodiments shown here. The embodiments are provided for illustrative purposes and are not intended to limit the scope of the invention since the scope of the present invention is limited only by the appended claims and equivalents thereof.

## Claims

1. A camshaft comprising a shaft and at least one segment,
wherein the at least one segment comprises at least one through hole,
wherein the shaft is positioned in the hole of the at least one segment,
wherein the segment is in contact with the shaft in at least two contact points, and
wherein the shape of the hole in the at least one segment is adapted to the cross section of the shaft so that the segment has a tension causing it to exerting a pressure on the shaft in the at least two contact points.

2. The camshaft according to claim 1, wherein there are at least three contact points between the shaft and the at least one segment.

3. The camshaft according to any one of claims 1-2, wherein at least one of the shaft and the segment comprises at least one pattern selected from the group consisting of groves, ribs, flutes, serrations, and ridges.

4. The camshaft according to any one of claims 1-3, wherein the at least one segment comprises at least one steel.

5. The camshaft according to any one of claims 1-4, wherein the at least one segment is additionally fixed to the shaft using at least one method selected from the group consisting of a mechanical lock, and bonding.

6. A method for the manufacture of a camshaft comprising at least one segment comprising the steps of:
a) providing at least one segment with at least one hole wherein the shape of the hole is adapted to fit onto the cross section of the shaft when a force is applied radially to the at least one segment,
b) with the same force as in step a) applied, inserting the camshaft axially into the hole in the at least one segment,
c) when the at least one segment is placed in the desired position on the camshaft; releasing the force applied to the at least one segment so that the at least one segment changes shape and comes into contact with the camshaft.

7. The method according to claim 6, wherein the cross sectional shape of the hole when the force is applied is circular.

8. The method according to any one of claims 6-7, wherein the cross sectional shape of the hole when the force is applied is circular with at least one deviation.

9. The method according to any one of claims 6-8, wherein the force is adapted so that it is below the yield point so that the material in the segment does not deform plastically, but only deforms elastically when the force is applied.

10. The method according to any one of claims 6-9, wherein the force is adapted so that the material in the segment deforms plastically when the force is applied.

11. The method according to any one of claims 6-10, wherein the hole in the at least one segment is made by applying a force radially to the at least one segment and thereafter creating the hole.

12. The method according to any one of claims 6-11, wherein the at least one segment is hardened before step c).

13. The method according to any one of claims 6-12, wherein the camshaft is solid.

14. The method according to any one of claims 6-13, wherein the camshaft is at least partially hollow.

15. The method according to any one of claims 6-14, wherein the at least one segment is finished after step c).

16. The method according to any one of claims 6-15, wherein the at least one segment is fixed to the camshaft with at least one additional method.

17. The method according to any one of claims 6-17, wherein the at least one segment provided in step a) is made from one selected from the group consisting of a tube, a bar, and a forged object.
